# FASCICULE DE BREVET EUROPEEN

(11) **EP 2 577 024 B1**
(45) Date de publication et mention de la délivrance du brevet: **02.04.2014**
(21) Numéro de dépôt: 11727261.7
(22) Date de dépôt: 25.05.2011
(51) Int. Cl.: F02C 7/266

(54) **PRECHAUFFAGE D'UNE BOUGIE D'ALLUMAGE**
VORWÄRMUNG EINER ZUNDKERZE
PRE-HEATING OF A SPARK PLUG

(30) Priorité: 04.06.2010 FR 1054421
(43) Date de publication de la demande: 10.04.2013
(73) Titulaire: Snecma, 75015 Paris (FR)
(72) Inventeur: CHATENET, Luc, Henri, F-77240 Seine Port (FR); SCHAEFFER, Christian, F-77310 Pringy (FR); STIFANIC, David, F-77000 La Rochette (FR)
(74) Mandataire: David, Alain
(86) Numéro de dépôt international: PCT/FR2011/051181
(87) Numéro de publication internationale: WO 2011/151567

(56) Documents cités:
- US-A- 5 148 084
- US-A1- 2006 037 304

## Description

### Arrière-plan de l'invention

L'invention concerne les bougies d'allumage pour turbomachine. En particulier, la présente invention se rapporte à la fiabilité des bougies d'allumage qui présentent un corps semi-conducteur entre leurs électrodes. Sont visées entre autres les bougies d'allumage de chambre de combustion de turbomachines.

Un type de bougie d'allumage connu présente une première électrode et une deuxième électrode séparées par un corps semi-conducteur. Ce type de bougie d'allumage offre une bonne fiabilité et permet également de diminuer la taille des boitiers d'allumage qui alimentent les bougies. Les semi-conducteurs haute tension utilisés, également appelés Cermet ou Pellet, sont constitués d'une céramique isolante et de grains d'un matériau conducteur. En abaissant la tension de claquage, cette technologie permet d'éviter beaucoup de fuites électriques dans les harnais auxquels les bougies sont reliées et de réduire la taille des transformateurs d'alimentation.

Ce type de bougie d'allumage présente cependant certains inconvénients. En particulier, les semi-conducteurs utilisés sont sensibles aux conditions environnantes. Notamment, dans des conditions givrantes ou humides, on constate une rapide détérioration des bougies. Par exemple, une bougie d'allumage dont la durée de vie en conditions normales est supérieure à 10000 cycles d'allumage peut être pratiquement détruite après 1200 cycles en présence d'humidité persistante. De plus, en conditions humides ou givrantes, on constate que beaucoup d'étincelles commandées ne sont pas produites par la bougie. Ce manque peut retarder l'allumage de la turbomachine et donc accélérer la détérioration de la bougie puisque le cycle est allongé. Enfin, dans certaines conditions, l'allumage de la turbomachine ne se produit pas.

### Objet et résumé de l'invention

L'invention a pour but de proposer un procédé d'allumage qui ne présente pas au moins certains des inconvénients de l'art antérieur précité. En particulier, un but de l'invention est d'éviter une détérioration rapide d'une bougie d'allumage.

A cet effet, l'invention propose un procédé d'allumage d'une turbomachine avec une bougie d'allumage comprenant une première électrode, une deuxième électrode et un corps semi-conducteur entre la première électrode et la deuxième électrode, le corps semi-conducteur présentant une surface exposée, le procédé d'allumage comprenant une étape de génération d'une étincelle adjacente à ladite surface exposée avec application d'une différence de tension supérieure à un premier seuil prédéterminé entre la première électrode et la deuxième électrode, caractérisé par le fait qu'il comprend, avant ladite étape de génération d'une étincelle, une étape de préchauffage comprenant l'application d'une différence de tension inférieure à un deuxième seuil prédéterminé entre la première électrode et la deuxième électrode, ledit deuxième seuil prédéterminé étant inférieur audit premier seuil prédéterminé.

La génération d'une étincelle implique l'ionisation du gaz adjacent à la surface exposée du corps semi-conducteur. Toutefois, en cas de conditions givrantes ou humides, de la glace ou de l'eau peut recouvrir la surface exposée du corps semi-conducteur et ainsi limiter la quantité de gaz pouvant être ionisée. Ceci a pour conséquence, en cas de tentative de génération d'une étincelle dans cette situation, une augmentation de la tension de claquage et une concentration de la décharge à la surface du semi-conducteur, ce qui conduit à une érosion rapide du corps semi-conducteur et à la génération de fissures dans le corps semi-conducteurs qui accélèrent sa dégradation.

L'étape de préchauffage permet d'éviter cette dégradation rapide. En effet, l'application d'une tension réduite entre les deux électrodes ne génère pas d'étincelle mais produit un courant de fuite qui traverse le corps semi-conducteur. La chaleur générée permet de sécher la bougie. Ainsi, après l'étape de préchauffage, une étincelle peut être générée sans glace ni eau recouvrant la surface exposée du corps semi-conducteur.

Selon un mode de réalisation, ladite étape de préchauffage présente une durée prédéterminée supérieure à 5 secondes. Par exemple, la durée prédéterminée peut être comprise entre 30 secondes et 10 minutes.

Le premier seuil prédéterminé peut être supérieur à 900 V. Le deuxième seuil prédéterminé peut être inférieur à 900 V. Par exemple, le deuxième seuil prédéterminé est inférieur ou égal à 100 V.

Selon une variante, pendant l'étape de préchauffage, la différence de tension appliquée entre la première électrode et la deuxième électrode est constante.

Selon une autre variante, pendant l'étape de préchauffage, la différence de tension appliquée entre la première électrode et la deuxième électrode est commandée par un régulateur de courant.

L'invention fournit aussi un procédé de démarrage d'une turbomachine comprenant une étape de mise en rotation de la turbomachine par un démarreur et une étape d'allumage de la turbomachine par le procédé d'allumage ci-dessus, dans lequel l'étape de préchauffage débute lorsque la vitesse de rotation de la turbomachine atteint un seuil prédéterminé.

L'invention propose également un système d'allumage pour turbomachine, comprenant une bougie d'allumage et un dispositif d'alimentation relié à ladite bougie d'allumage, la bougie d'allumage comprenant une première électrode, une deuxième électrode et un corps semi-conducteur entre la première électrode et la deuxième électrode, le corps semi-conducteur présentant une surface exposée, le dispositif d'alimentation comprenant des moyens de génération d'une étincelle adjacente à ladite surface exposée aptes à appliquer une différence de tension supérieure à un premier seuil prédéterminé entre la première électrode et la deuxième électrode, caractérisé par le fait que le dispositif d'alimentation comprend des moyens de préchauffage aptes à appliquer une différence de tension inférieure à un deuxième seuil prédéterminé entre la première électrode et la deuxième électrode, ledit deuxième seuil prédéterminé étant inférieur audit premier seuil prédéterminé.

Le dispositif d'alimentation peut comprendre une interface d'entrée pour recevoir un signal de commande, et des moyens d'activation aptes à activer lesdits moyens de génération ou lesdits moyens de préchauffage en fonction du signal de commande.

### Brève description des dessins

L'invention sera mieux comprise à la lecture de la description faite ci-après, à titre indicatif mais non limitatif, en référence aux dessins annexés sur lesquels :
- la figure 1 représente schématiquement un système d'allumage selon un mode de réalisation de l'invention ;
- la figure 2 est une vue en coupe d'une bougie d'allumage du système d'allumage de la figure 1 ;
- la figure 3 représente l'extrémité de la bougie d'allumage de la figure 2, recouverte de glace ou d'eau ;
- la figure 4 est un graphe représentant, pour plusieurs bougies conformes à la figure 2 testées, le courant traversant la bougie en fonction de la tension appliquée ; et
- la figure 5 est un graphe représentant un signal de commande et la différence de tension appliquée aux électrodes de la bougie de la figure 2, en fonction du temps.

### Description détaillée d'un mode de réalisation

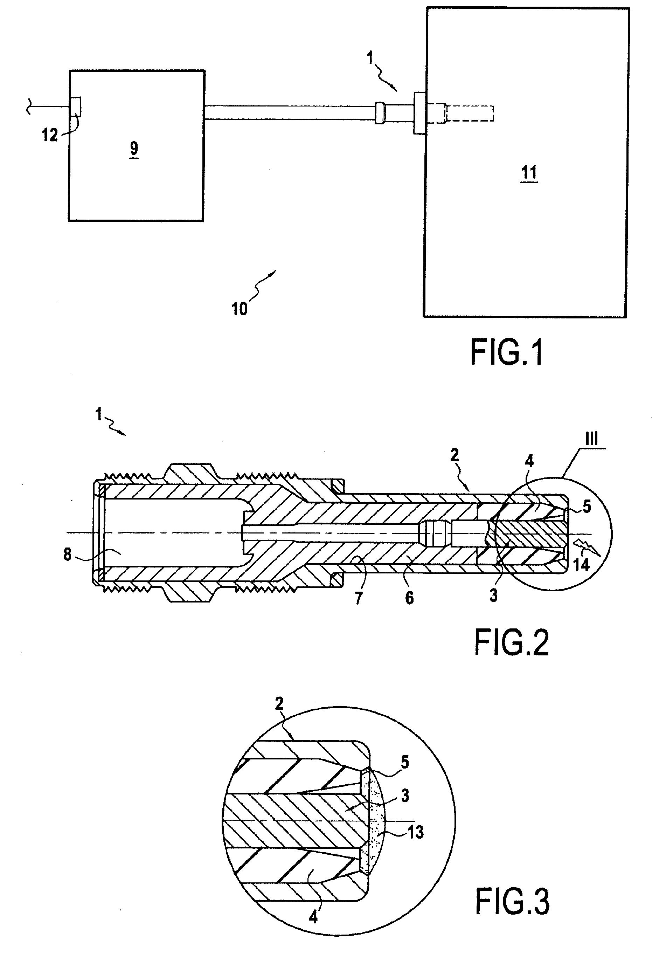

La figure 1 représente un système d'allumage 10 pour turbomachine 11. Le système d'allumage 10 comprend généralement plusieurs bougies d'allumage destinées à produire des étincelles pour l'allumage de la turbomachine 11. Les bougies d'allumages sont reliées à un boîtier d'alimentation 9. Le boitier d'alimentation 9 présente une interface d'entrée 12 pour recevoir un signal de commande. Sur la figure 1, seule une bougie d'allumage 1 est représentée.

La figure 2 représente la bougie d'allumage 1, vue en coupe. La bougie d'allumage 1 comprend une électrode 2 et une électrode 3.

L'électrode 2 présente un orifice 7 globalement en forme de cylindre de révolution, et l'électrode 3 est logée dans l'orifice 7. Du côté droit de la figure 1, l'extrémité de l'électrode 3 affleure avec l'extrémité de l'électrode 2 et un corps semi-conducteur 4 sépare les électrodes 2 et 3. Le corps semi-conducteur 4 présente une surface exposée 5.

Dans l'orifice 7, les électrodes 2 et 3 sont séparées par du matériau isolant 6. Enfin, du côté gauche de la figure 1, l'orifice 7 est évasé et l'extrémité de l'électrode 3 est dégagée, pour former un connecteur 8 permettant de relier la bougie d'allumage 1 au boitier d'alimentation 9.

Ainsi, le boitier d'alimentation 9 peut appliquer une différence de tension élevée entre les électrodes 2 et 3, ce qui a pour conséquence la génération d'une étincelle 14 devant la surface exposée 5 du corps semi-conducteur 4, comme le représente la figure 2. Toutefois, dans des conditions givrantes ou humides, un bouchon 13 de glace ou d'eau peut recouvrir la surface exposée 5 du corps semi-conducteur 4, comme le représente la figure 3. Le bouchon 13 peut gêner ou empêcher la production d'une étincelle.

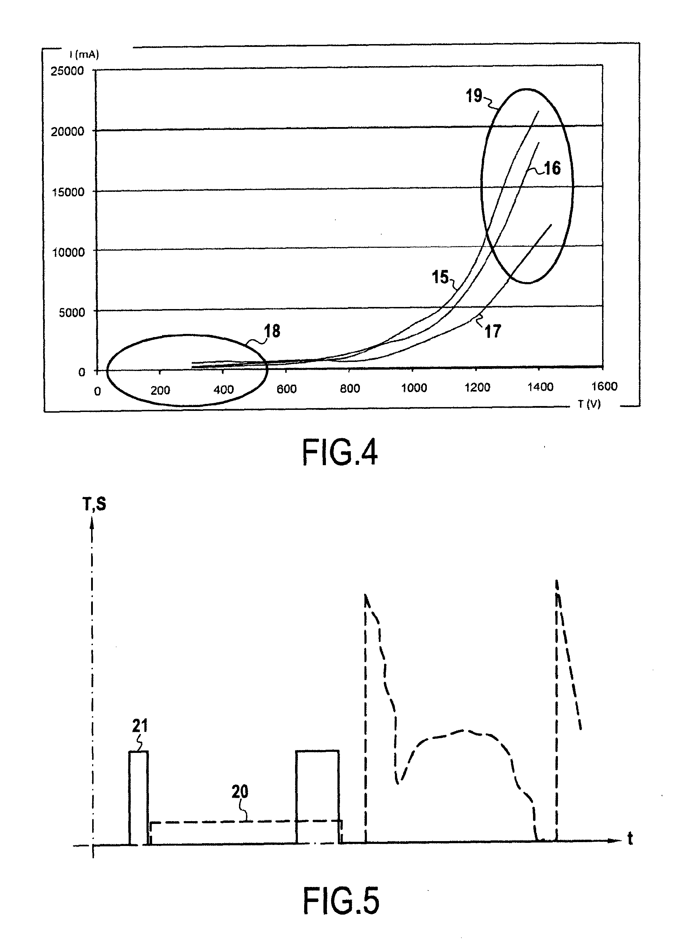

La figure 4 représente le courant I passant dans la bougie d'allumage 1, en fonction de la différence de tension T appliquée entre les électrodes 2 et 3. Les courbes 15, 16 et 17 correspondent respectivement à des corps semi-conducteurs 4 de différentes compositions.

Pour une différence de tension T élevée, typiquement supérieure à 900V, le courant I est élevé également. En l'absence du bouchon 13, une étincelle 14 est générée. La zone 19 entourée correspond à la zone de production d'une étincelle 14.

Par contre, pour une différence de tension T faible, typiquement inférieure à 900V, aucune étincelle n'est générée. Toutefois, la bougie d'allumage 1 laisse passer un courant I de fuite faible dont la valeur dépend de la différence de tension appliquée. La figure 4 montre que le courant de fuite est relativement stable dans une zone 18.

Pour éviter les problèmes de détérioration de la bougie d'allumage 1 causé par la présence du bouchon 13, la bougie d'allumage 1 est préchauffée avant de générer une étincelle 14.

Plus précisément, pendant une étape de préchauffage qui précède l'étape de génération d'une étincelle 14, le boitier d'alimentation 9 applique une différence de tension faible entre les électrodes 2 et 3, typiquement de l'ordre de 20 à 100 V. En variante, une différence de tension allant jusqu'à 900V pourrait être appliquée car aucune étincelle n'est générée. Comme le montre la figure 4, un courant de fuite passe à travers le corps semi-conducteur 4, qui chauffe par effet Joule. La chaleur produite fait sécher la bougie d'allumage 1, évacuant ainsi le bouchon 13.

La durée de l'étape de préchauffage est par exemple une durée prédéterminée en fonction de la différence de tension appliquée et de la bougie d'allumage 1. Typiquement, la durée prédéterminée peut être comprise entre 30 secondes et 10 minutes.

Par exemple, lors d'essais réalisés sur une bougie d'allumage 1 recouverte de glace à -15°C, les temps de séchage suivants ont été mesurés :
- 6 minutes pour une différence de tension de 28V (courant de 10 mA).
- 2,5 minutes pour une différence de tension de 50V (courant de 20mA).
- 35 secondes pour une différence de tension de 100V (courant de 500mA).

Pendant l'étape de préchauffage, une différence de tension de valeur constante est appliquée. En variante, la différence de tension peut être déterminée par un régulateur de courant maintenant le courant constant.

Après l'étape de préchauffage, l'étape de génération d'une étincelle peut se produire de manière classique. Plus précisément, pendant une phase de mise en charge, le boîtier d'alimentation 9 accumule de l'énergie dans un élément de stockage. Ensuite, l'énergie stockée est transférée à la bougie d'allumage 1 pour générer une étincelle.

Le boitier d'alimentation 9 présente une interface d'entrée 12 permettant de recevoir un signal de commande. Le signal de commande indique au boitier d'alimentation 9 de commuter entre un état dans lequel il applique une tension réduite pour l'étape de préchauffage et un état dans lequel il applique une tension élevée pour l'étape de génération d'une étincelle.

Par exemple, le signal de commande comprend une impulsion de courte durée pour demander l'étape de préchauffage et une impulsion de plus longue durée pour demander l'étape de génération d'une étincelle. Cet exemple est illustré sur la figure 5. Sur la figure 5, la courbe 20 illustre la différence de tension T appliquée en fonction du temps t, et la courbe 21 illustre le signal de commande S en fonction du temps.

De manière connue, le démarrage de la turbomachine 11 commence par la mise en rotation de la turbomachine 11 à l'aide d'un démarreur. La vitesse de rotation de la turbomachine 11 augmente progressivement. Lorsque la vitesse de rotation atteint un niveau déterminé, des étincelles sont générées pour l'allumage de la turbomachine 11. Connaissant l'évolution de la vitesse de rotation de la turbomachine 11 et la durée prédéterminée de l'étape de préchauffage de la bougie d'allumage 1, il est possible de choisir un seuil de vitesse de rotation pour débuter l'étape de préchauffage.

## Revendications

1. Procédé d'allumage d'une turbomachine (11) avec une bougie d'allumage (1) comprenant une première électrode (2), une deuxième électrode (3) et un corps semi-conducteur (4) entre la première électrode et la deuxième électrode, le corps semi-conducteur présentant une surface exposée (5), le procédé d'allumage comprenant une étape de génération d'une étincelle (14) adjacente à ladite surface exposée avec application d'une différence de tension supérieure à un premier seuil prédéterminé entre la première électrode et la deuxième électrode, **caractérisé par le fait qu'**il comprend, avant ladite étape de génération d'une étincelle, une étape de préchauffage comprenant l'application d'une différence de tension inférieure à un deuxième seuil prédéterminé entre la première électrode et la deuxième électrode, ledit deuxième seuil prédéterminé étant inférieur audit premier seuil prédéterminé.

2. Procédé d'allumage selon la revendication 1, dans lequel ladite étape de préchauffage présente une durée prédéterminée supérieure à 5 secondes.

3. Procédé d'allumage selon l'une des revendications 1 et 2, dans lequel ledit premier seuil prédéterminé est supérieur à 900 V.

4. Procédé d'allumage selon l'une des revendications 1 à 3, dans lequel ledit deuxième seuil prédéterminé est inférieur à 900 V.

5. Procédé d'allumage selon la revendication 4, dans lequel ledit deuxième seuil prédéterminé est inférieur ou égal à 100 V.

6. Procédé d'allumage selon l'une des revendications 1 à 5, dans lequel, pendant l'étape de préchauffage, la différence de tension appliquée entre la première électrode et la deuxième électrode est constante.

7. Procédé d'allumage selon l'une des revendications 1 à 5, dans lequel, pendant l'étape de préchauffage, la différence de tension appliquée entre la première électrode et la deuxième électrode est commandée par un régulateur de courant.

8. Procédé de démarrage d'une turbomachine (11) comprenant une étape de mise en rotation de la turbomachine par un démarreur et une étape d'allumage de la turbomachine par le procédé d'allumage selon l'une des revendications 1 à 7, dans lequel l'étape de préchauffage débute lorsque la vitesse de rotation de la turbomachine atteint un seuil prédéterminé.

9. Système d'allumage pour turbomachine (11), comprenant une bougie d'allumage (1) et un dispositif d'alimentation (9) relié à ladite bougie d'allumage, la bougie d'allumage comprenant une première électrode (2), une deuxième électrode (3) et un corps semi-conducteur (4) entre la première électrode et la deuxième électrode, le corps semi-conducteur présentant une surface exposée (5), le dispositif d'alimentation comprenant des moyens de génération d'une étincelle (14) adjacente à ladite surface exposée configurés de manière à appliquer une différence de tension supérieure à un premier seuil prédéterminé entre la première électrode et la deuxième électrode, **caractérisé par le fait que** le dispositif d'alimentation comprend des moyens de préchauffage configurés de manière à appliquer une différence de tension inférieure à un deuxième seuil prédéterminé entre la première électrode et la deuxième électrode, ledit deuxième seuil prédéterminé étant inférieur audit premier seuil prédéterminé.

10. Système d'allumage selon la revendication 9, dans lequel ledit dispositif d'alimentation comprend une interface d'entrée (12) pour recevoir un signal de commande, et des moyens d'activation aptes à activer lesdits moyens de génération ou lesdits moyens de préchauffage en fonction du signal de commande.

## Patentansprüche

1. Verfahren zum Zünden einer Turbomaschine (11) mit einer Zündkerze (1), die eine erste Elektrode (2), eine zweite Elektrode (3) und einen Halbleiterkörper (4) zwischen der ersten Elektrode und der zweiten Elektrode umfasst, wobei der Halbleiterkörper eine exponierte Oberfläche (5) aufweist, wobei das Zündverfahren einen Schritt zum Erzeugen eines zu der exponierten Oberfläche benachbarten Funkens (14) unter Anlegen einer Spannungsdifferenz, die über einer vorbestimmten ersten Schwelle liegt, zwischen der ersten Elektrode und der zweiten Elektrode umfasst, **dadurch gekennzeichnet, dass** es vor dem Schritt zum Erzeugen eines Funkens einen Vorheizschritt umfasst, der das Anlegen einer Spannungsdifferenz, die unter einer vorbestimmten zweiten Schwelle liegt, zwischen der ersten Elektrode und der zweiten Elektrode umfasst, wobei die vorbestimmte zweite Schwelle geringer als die vorbestimmte erste Schwelle ist.

2. Zündverfahren nach Anspruch 1, wobei der Vorheizschritt eine vorbestimmte Dauer von mehr als 5 Sekunden aufweist.

3. Zündverfahren nach einem der Ansprüche 1 und 2, wobei die vorbestimmte erste Schwelle oberhalb von 900 V liegt.

4. Zündverfahren nach einem der Ansprüche 1 bis 3, wobei die vorbestimmte zweite Schwelle unterhalb von 900 V liegt.

5. Zündverfahren nach Anspruch 4, wobei die vorbestimmte zweite Schwelle weniger als oder gleich 100 V beträgt.

6. Zündverfahren nach einem der Ansprüche 1 bis 5, wobei während des Vorheizschrittes die zwischen der ersten Elektrode und der zweiten Elektrode angelegte Spannungsdifferenz konstant ist.

7. Zündverfahren nach einem der Ansprüche 1 bis 5, wobei während des Vorheizschrittes die zwischen der ersten Elektrode und der zweiten Elektrode angelegte Spannungsdifferenz durch einen Stromregler gesteuert wird.

8. Verfahren zum Starten einer Turbomaschine (11), umfassend einen Schritt zum Indrehungversetzen der Turbomaschine durch einen Anlasser und einen Schritt zum Zünden der Turbomaschine durch das Zündverfahren nach einem der Ansprüche 1 bis 7, wobei der Vorheizschritt beginnt, wenn die Rotationsgeschwindigkeit der Turbomaschine eine vorbestimmte Schwelle erreicht.

9. Zündsystem für eine Turbomaschine (11), umfassend eine Zündkerze (1) und eine mit der Zündkerze verbundene Versorgungseinrichtung (9), wobei die Zündkerze eine erste Elektrode (2), eine zweite Elektrode (3) und einen Halbleiterkörper (4) zwischen der ersten Elektrode und der zweiten Elektrode umfasst, wobei der Halbleiterkörper eine exponierte Oberfläche (5) aufweist, wobei die Versorgungseinrichtung Mittel zum Erzeugen eines zu der exponierten Oberfläche benachbarten Funkens (14) umfasst, die so ausgelegt sind, dass eine Spannungsdifferenz, die über einer vorbestimmten ersten Schwelle liegt, zwischen der ersten Elektrode und der zweiten Elektrode angelegt wird, **dadurch gekennzeichnet, dass** die Versorgungseinrichtung Vorheizmittel umfasst, die so ausgelegt sind, dass eine Spannungsdifferenz, die unter einer vorbestimmten zweiten Schwelle liegt, zwischen der ersten Elektrode und der zweiten Elektrode angelegt wird, wobei die vorbestimmte zweite Schwelle geringer als die vorbestimmte erste Schwelle ist.

10. Zündsystem nach Anspruch 9, wobei die Versorgungseinrichtung eine Eingangsschnittstelle (12) zum Empfangen eines Steuersignals sowie Aktivierungsmittel umfasst, die geeignet sind, in Abhängigkeit von dem Steuersignal die Erzeugungsmittel oder die Vorheizmittel zu aktivieren.

## Claims

1. A method of igniting a turbine engine (11) using a spark plug (1) comprising a first electrode (2), a second electrode (3) and a semiconductor body (4) between the first electrode and the second electrode, the semiconductor body having an exposed surface (5), the ignition method comprising a step of generating a spark (14) adjacent to said exposed surface by applying a voltage difference greater than a first predetermined threshold between the first electrode and the second electrode, said method being **characterized by** the fact that, prior to said step of generating a spark, it further comprises a preheating step consisting in applying a voltage difference less than a second predetermined threshold between the first electrode and the second electrode, said second predetermined threshold being less than said first predetermined threshold.

2. An ignition method according to claim 1, wherein said preheating step has a predetermined duration greater than 5 seconds.

3. An ignition method according to claim 1 or claim 2, wherein said first predetermined threshold is greater than 900 V.

4. An ignition method according to any one of claims 1 to 3, wherein said second predetermined threshold is less than 900 V.

5. An ignition method according to claim 4, wherein said second predetermined threshold is less than or equal to 100 V.

6. An ignition method according to any one of claims 1 to 5, wherein, during the preheating step, the voltage difference applied between the first electrode and the second electrode is constant.

7. An ignition method according to any one of claims 1 to 5, wherein, during the preheating step, the voltage difference applied between the first electrode and the second electrode is controlled by a current regulator.

8. A method of starting a turbine engine (11) comprising a step of causing a starter motor to start rotating the turbine engine, and a step of igniting the turbine engine by implementing the ignition method according to any one of claims 1 to 7, wherein the preheating step starts when the speed of rotation of the turbine engine reaches a predetermined threshold.

9. An ignition system for a turbine engine (11), which system comprises a spark plug (1) and a power supply device (9) connected to said spark plug, the spark plug comprising a first electrode (2), a second electrode (3) and a semiconductor body (4) between the first electrode and the second electrode, the semiconductor body having an exposed surface (5), the power supply device comprising generation means for generating a spark (14) adjacent to said exposed surface, which means are configured in order to apply a voltage difference greater than a first predetermined threshold between the first electrode and the second electrode, said ignition system being **characterized by** the fact that the power supply device further comprises preheating means configured in order to apply a voltage difference less than a second predetermined threshold between the first electrode and the second electrode, said second predetermined threshold being less than said first predetermined threshold.

10. An ignition system according to claim 9, wherein said power supply device further comprises an input interface (12) for receiving a control signal, and activation means suitable for activating said generation means or said preheating means as a function of the control signal.
